(19) Europäisches Patentamt / European Patent Office / Office européen des brevets

(11) **EP 4 466 170 B1**

(12) **FASCICULE DE BREVET EUROPÉEN**

(45) Date de publication et mention de la délivrance du brevet:
**27.08.2025 Bulletin 2025/35**

(21) Numéro de dépôt: **22835462.7**

(22) Date de dépôt: **02.12.2022**

(51) Classification Internationale des Brevets (IPC):
***B60W 30/14*** *(2006.01)*

(52) Classification Coopérative des Brevets (CPC):
**B60W 30/14; B60W 2520/10; B60W 2720/106**

(86) Numéro de dépôt international:
**PCT/FR2022/052236**

(87) Numéro de publication internationale:
**WO 2023/139321 (27.07.2023 Gazette 2023/30)**

(54) **PROCÉDÉ ET DISPOSITIF DE CONTRÔLE D'ACCÉLÉRATION D'UN VÉHICULE EMBARQUANT UN SYSTÈME DE RÉGULATION DE VITESSE**

VERFAHREN UND VORRICHTUNG ZUR STEUERUNG DER BESCHLEUNIGUNG EINES FAHRZEUGS MIT EINEM BORDGESCHWINDIGKEITSREGELSYSTEM

METHOD AND DEVICE FOR CONTROLLING THE ACCELERATION OF A VEHICLE HAVING AN ON-BOARD CRUISE CONTROL SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.01.2022 FR 2200532**

(43) Date de publication de la demande:
**27.11.2024 Bulletin 2024/48**

(73) Titulaire: **Stellantis Auto SAS**
**78300 Poissy (FR)**

(72) Inventeur: **VIVET, Luc**
**75016 PARIS 16 (FR)**

(74) Mandataire: **ESIP**
**Stellantis Auto SAS**
**Service REIP - YT800**
**43, rue Jean Pierre Timbaud**
**78300 Poissy (FR)**

(56) Documents cités:
**EP-A1- 3 498 556        DE-A1- 102013 011 623**
**US-A1- 2017 282 927**

## Description

### Domaine technique

La présente invention concerne les procédés et dispositifs de contrôle de l'accélération d'un véhicule, notamment un véhicule automobile. La présente invention concerne également un procédé et un dispositif de contrôle d'un système de régulation de vitesse d'un véhicule. La présente invention concerne également un procédé et un dispositif de contrôle d'un véhicule, notamment un véhicule autonome.

### Arrière-plan technologique

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de régulation de vitesse ou le système de régulation adaptative de vitesse, dit ACC (de l'anglais « Adaptive Cruise Control ») a pour fonction première la régulation automatiquement (de façon adaptative pour le système ACC) de la vitesse des véhicules qui en sont équipés en fonction de leur environnement.

Le système de régulation de vitesse détermine une ou plusieurs consignes d'accélération pour atteindre une vitesse de consigne, par exemple réglée par le conducteur du véhicule.

Le système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.

Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire. Un tel véhicule est appelé véhicule cible ou objet cible du système ACC. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Le confort des passagers d'un véhicule est un autre facteur important, notamment pour l'acceptation des systèmes d'aide à la conduite des véhicules. Par exemple, une accélération trop importante est une cause d'inconfort pour les passagers d'un véhicule, notamment lorsque l'accélération est contrôlée par un système de régulation de vitesse, par exemple un système ACC. Des accélérations importantes sont par exemple dues à une augmentation de la vitesse de consigne par le conducteur. Le compromis entre le confort dynamique des passagers et la rapidité de la stabilisation de la vitesse jusqu'à atteindre la vitesse de consigne est parfois difficile à trouver.

En outre, l'état de la technique est connu des documents EP3498556A1 et US2017282927A1.

### Résumé de la présente invention

Un objet de la présente invention est de résoudre au moins l'un des problèmes de l'arrière-plan technologique décrit précédemment.

Un autre objet de la présente invention est d'améliorer la régulation de l'accélération d'un véhicule.

Selon un premier aspect, la présente invention concerne un procédé de contrôle d'accélération d'un véhicule embarquant un système de régulation de vitesse, le procédé comprenant les étapes suivantes :

- réception d'une information représentative d'une vitesse de consigne pour le système de régulation de vitesse ;
- détermination d'un coefficient de pondération d'une valeur d'accélération maximale déterminée du système de régulation de vitesse en fonction d'une vitesse du véhicule, le coefficient de pondération diminuant lorsque la vitesse du véhicule augmente ;
- détermination d'une valeur d'accélération potentielle brute en fonction du coefficient de pondération et de la valeur d'accélération maximale déterminée ;
- contrôle de l'accélération du véhicule en fonction de la valeur d'accélération potentielle brute.

Un tel procédé permet d'améliorer la régulation de l'accélération du véhicule en filtrant ou réduisant l'accélération maximale fixée dans le système de régulation de vitesse en fonction de la vitesse courante du véhicule. Cette réduction est telle que l'accélération maximale, et ainsi l'accélération de consigne possible du véhicule, est d'autant plus réduite que la vitesse du véhicule augmente. Ainsi, lorsque la vitesse du véhicule est faible (par exemple par rapport à la vitesse de consigne) alors l'accélération maximale déterminée par le système de régulation de vitesse est importante et cette valeur d'accélération maximale diminue au fur et à mesure que la vitesse du véhicule augmente, jusqu'à ce que la vitesse du véhicule atteigne la vitesse de consigne par exemple.

Cela permet ainsi de trouver un compromis entre la rapidité de stabilisation de la vitesse (par exemple pour atteindre la vitesse de consigne) et le confort dynamique des passagers en permettant une accélération maximale, donc de consigne, plus forte lorsque la vitesse du véhicule est faible (et potentiellement éloignée de la vitesse de consigne) et en réduisant l'accélération maximale lorsque la vitesse du véhicule augmente (et potentiellement plus proche de la vitesse de consigne).

Selon une variante, le coefficient de pondération, noté R(V), est égal à :

$$R(V) = 1 - (V/(Vm+V0))^2,$$

avec R(V) correspondant au coefficient de pondération, V correspondant à la vitesse du véhicule, Vm correspondant à une valeur seuil haute de vitesse et V0 correspondant à une valeur seuil basse de vitesse.

Selon une autre variante, Vm est égale à 50 m/s et V0 est égale à 5.5 m/s.

Selon une variante supplémentaire, l'accélération potentielle brute, notée A, est égale à :

$$A = A0 * R(V),$$

avec AO correspondant à la valeur d'accélération maximale déterminée.

Selon encore une variante, AO est égale à 1.6 m/s$^2$.

Selon une variante additionnelle, le système de régulation de vitesse correspond à un système de régulation adaptative de vitesse.

Selon un deuxième aspect, la présente invention concerne un dispositif de contrôle d'accélération d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

**Brève description des figures**

D'autres caractéristiques et avantages de la présente invention ressortiront de la description des exemples de réalisation particuliers et non limitatifs de la présente invention ci-après, en référence aux figures 1 à 4 annexées, sur lesquelles :

[Fig. 1] illustre schématiquement un environnement d'un véhicule, selon un exemple de réalisation particulier et non limitatif de la présente invention ;

[Fig. 2] illustre un diagramme représentant une courbe de l'accélération potentielle brute déterminée par un système de régulation de vitesse du véhicule de la figure 1 en fonction de la vitesse du véhicule de la figure 1, selon un exemple de réalisation particulier et non limitatif de la présente invention ;

[Fig. 3] illustre schématiquement un dispositif configuré pour contrôler l'accélération du véhicule de la figure 1, selon un exemple de réalisation particulier et non limitatif de la présente invention ;

[Fig. 4] illustre un organigramme des différentes étapes d'un procédé de contrôle d'accélération du véhicule de la figure 1, selon un exemple de réalisation particulier et non limitatif de la présente invention.

**Description des exemples de réalisation**

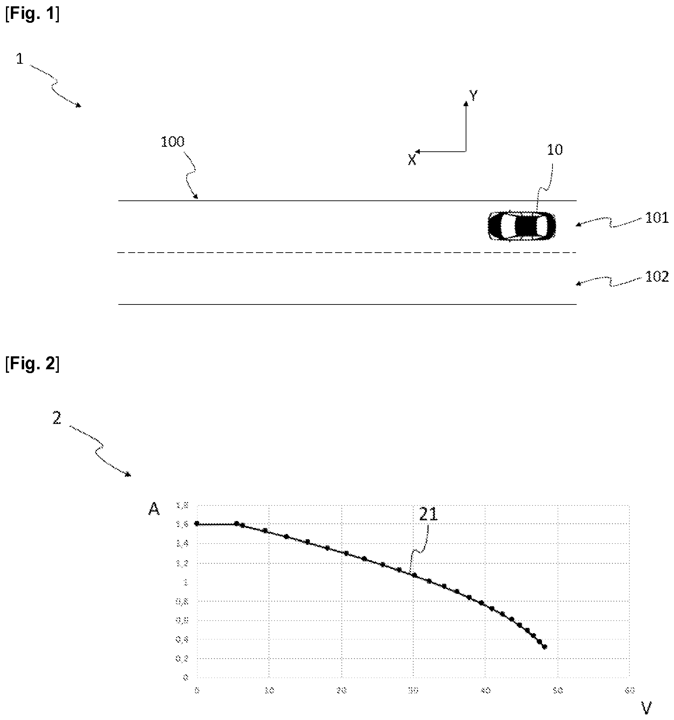

Un procédé et un dispositif de contrôle d'accélération d'un véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de la présente invention, le contrôle de l'accélération d'un véhicule, par exemple par un système de régulation de vitesse embarqué dans le véhicule, comprend la réception d'une information représentative d'une vitesse de consigne pour le système de régulation de vitesse. Cette consigne de vitesse est par exemple paramétrée par le conducteur du véhicule par l'intermédiaire d'une interface homme-machine, dite IHM. Le système détermine un coefficient de pondération à appliquer à une valeur d'accélération maximale déterminée du système de régulation de vitesse (laquelle correspond par exemple à un paramètre défini du système) en fonction d'une vitesse courante du véhicule. Un tel coefficient de pondération diminue avantageusement lorsque la vitesse du véhicule augmente. Une valeur d'accélération potentielle brute est alors déterminée en fonction du coefficient de pondération et de la valeur d'accélération maximale déterminée. Enfin, l'accélération du véhicule est déterminée en fonction de la valeur d'accélération potentielle brute, en vue de réguler la vitesse du véhicule en fonction de la vitesse de consigne.

L'accélération potentielle brute correspond par exemple à une consigne d'accélération déterminée ou calculée par le système de régulation de vitesse, avant un éventuel filtrage pour améliorer par exemple le confort ou la sécurité des passagers du véhicule.

L'accélération potentielle brute représente ainsi le maximum d'accélération que le système de régulation peut appliquer pour contrôler l'accélération du véhicule.

Un tel procédé permet de filtrer ou réduire l'accélération maximale fixée dans le système de régulation de vitesse en fonction de la vitesse courante du véhicule. Cette réduction est telle que l'accélération maximale est d'autant plus réduite que la vitesse du véhicule augmente. Ainsi, lorsque la vitesse du véhicule est faible (par exemple par rapport à la vitesse de consigne) alors l'accélération maximale déterminée par le système de régulation de vitesse est importante et cette valeur d'accélération maximale diminue au fur et à mesure que la vitesse du véhicule augmente, jusqu'à ce que la vitesse du véhicule atteigne la vitesse de consigne par exemple.

Cela permet ainsi de trouver un compromis entre la rapidité de stabilisation de la vitesse (par exemple pour atteindre la vitesse de consigne) et le confort dynamique des passagers en permettant une accélération maximale, donc de consigne, plus forte lorsque la vitesse du véhicule est faible (et potentiellement éloignée de la vitesse de consigne) et en réduisant l'accélération maximale lorsque la vitesse du véhicule augmente (et potentiellement plus proche de la vitesse de consigne).

La figure 1 illustre schématiquement un environnement 1 d'un véhicule 10, selon un exemple de réalisation particulier et non limitatif de la présente invention.

La figure 1 illustre un véhicule 10, par exemple un véhicule automobile, embarquant un ou plusieurs capteurs configurés pour détecter la présence d'objets dans l'environnement 1 du véhicule 10. Selon d'autres exemples, le véhicule 10 correspond à un car, un bus, un camion, un véhicule utilitaire ou une motocyclette, c'est-à-dire à un véhicule de type véhicule terrestre motorisé.

Le véhicule 10 correspond à un véhicule circulant sous la supervision totale d'un conducteur ou circulant dans un mode autonome ou semi-autonome. Le véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le véhicule 10 circule sur une portion de route 100 à deux voies de circulations 101, 102. Le véhicule 10 circule par exemple sur la voie de circulation de droite 101, les deux voies de circulation 101 et 102 étant selon un même sens de circulation ou selon des sens de circulation contraires.

Le véhicule 10 embarque par exemple un ou plusieurs des capteurs suivants :

- un ou plusieurs radars à ondes millimétriques arrangés sur le véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple un véhicule circulant devant le véhicule 10), dans le but de détecter des obstacles et leurs distances vis-à-vis du véhicule 10 ; et/ou

- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple un véhicule circulant devant le véhicule 10) situés dans le faisceau lumineux émis et de mesurer la distance entre le capteur et chaque objet détecté ; et/ou

- une ou plusieurs caméras (associées ou non à un capteur de profondeur) pour l'acquisition d'une ou plusieurs images de l'environnement autour du véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple un véhicule circulant devant le véhicule 10, et d'en déduire un ou plusieurs paramètres dynamiques de l'objet mobile tels que la vitesse latérale, la vitesse longitudinale et/ou les accélérations latérale et longitudinale.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le véhicule 10. Un tel système ADAS est configuré pour assister, voire remplacer, le conducteur du véhicule 10 pour contrôler le véhicule 10 sur son parcours.

Selon un premier exemple, le véhicule 10 embarque un système ADAS correspondant à un système de régulation automatique de la vitesse, dit système CC (de l'anglais « Cruise Control »). Un tel système est destiné à stabiliser automatiquement la vitesse du véhicule autour d'une vitesse de consigne fixée par le conducteur du véhicule 10, par exemple via une manette de contrôle arrangée près du volant, sans que le conducteur n'ait à appuyer sur la pédale d'accélérateur. Le système CC gère la vitesse en déterminant ou calculant des valeurs d'accélération de consigne évoluant au cours du temps en fonction de la vitesse courante du véhicule (par exemple obtenue d'un capteur de vitesse embarqué dans le véhicule 10, par exemple un odomètre) et en fonction de la vitesse de consigne fixée par le conducteur. Ainsi, les données obtenues du ou des capteurs de vitesse embarqués dans le véhicule 10 permettent au système CC du véhicule 10 d'établir une valeur cible d'accélération $A_{cible}(t)$ (correspondant par exemple à l'accélération potentielle brute déterminée comme décrit ci-après) au cours du temps 't'. L'accélération cible $A_{cible}(t)$ devient une consigne d'accélération longitudinale $A_{consigne}(t)$, avec optionnellement un ou plusieurs filtrages réalisés sur $A_{cible}(t)$ pour obtenir $A_{consigne}(t)$.

Selon un deuxième exemple, le véhicule 10 embarque un système ADAS correspondant à un système de régulation adaptative de la vitesse, dit système ACC. Lorsque le système ACC est activé, le système ACC a pour objectif de réaliser une accélération de consigne, appelée $A_{consigne}(t)$, qui varie au cours du temps 't' et qui permet de maintenir ou atteindre une vitesse de régulation et/ou de maintenir une distance de sécurité déterminée vis-à-vis du deuxième véhicule 11 en amont du véhicule 10, c'est à dire d'un véhicule cible circulant devant le véhicule 10 dans le même sens de circulation sur la même voie de circulation. Les données obtenues du ou des capteurs embarqués dans le véhicule 10 permettent au système ACC du véhicule 10 d'établir une valeur cible d'accélération $A_{cible}(t)$ (dont un maximum correspond par exemple à l'accélération potentielle brute déterminée comme décrit ci-après) au cours du temps 't'. L'accélération cible $A_{cible}(t)$ devient une consigne d'accélération longitudinale $A_{consigne}(t)$, avec optionnellement un ou plusieurs filtrages réalisés sur $A_{cible}(t)$ pour obtenir $A_{consigne}(t)$. Le système ACC ou un calculateur de ce système transmet par exemple les consignes d'accélérations $A_{consigne}(t)$ qu'il a déterminé au(x) calculateur(s) supervisant le fonctionnement d'un groupe motopropulseur du véhicule 10, notamment pour que ce(s) dernier(s) détermine(nt) les consignes de couple à générer par le groupe motopropulseur pour respecter les consignes d'accélération $A_{consigne}(t)$ et réguler la vitesse longitudinale du véhicule 10.

Une valeur d'accélération cible est par exemple déterminée à un instant courant $t_0$ à partir d'un ensemble de données obtenues d'un ou plusieurs capteurs de détection d'objet embarqués dans le véhicule 10 et/ou de paramètres de consigne entrés par exemple par le conducteur ou déterminés à partir de données sur l'environnement du véhicule 10. La valeur d'accélération cible (exprimée en $m.s^{-2}$) est par exemple calculée à partir de :

- données représentatives du comportement dynamique d'un véhicule circulant devant le véhicule 10 (par exemple vitesse et/ou accélération) et correspondant à l'objet cible du système ACC, ces données étant par exemple obtenue à partir d'un ensemble de positions prises par ce véhicule circulant devant sur un intervalle de temps précédant l'instant courant $t_0$ pour lequel est déterminée l'accélération cible ;

- données représentatives du comportement dynamique du véhicule 10 (par exemple vitesse, accélération, distance vis-à-vis du deuxième véhicule 11), ces données étant obtenues de capteurs embarqués dans le véhicule 10, la distance étant par exemple obtenue à partir des données reçues du ou des capteurs de détection d'objet ; et/ou

- paramètres de consignes fournis au système ACC, tels que par exemple une vitesse cible, une distance ou un temps inter-véhicule (DIV ou TIV) cible, ces paramètres étant enregistrés en mémoire, déterminés par analyse de l'environnement (par exemple la vitesse cible est déterminée par lecture des panneaux de limitation de vitesse ou à partir de données reçus d'un système de navigation) ou entrés par un utilisateur via une interface Homme-Machine, dite IHM.

Selon un troisième exemple, le véhicule 10 embarque à la fois un système CC et un système ACC ou un seul et même système embarqué dans le véhicule 10 met en œuvre la fonction CC et la fonction ACC. En l'absence de véhicule cible détecté devant le véhicule 10, seul le système CC ou la fonction CC est mise en œuvre.

Un processus de contrôle de l'accélération du véhicule 10 est avantageusement mis en œuvre par le véhicule 10, c'est-à-dire par un calculateur ou une combinaison de calculateurs du système embarqué du véhicule 10, par exemple par le ou les calculateurs en charge de contrôler le système CC et/ou le système ACC.

Dans une première opération, une information représentative d'une vitesse de consigne pour le système de régulation de vitesse est reçue. Cette information correspond par exemple à une valeur de vitesse en m.s⁻¹ réglée, paramétrée ou entrée par le conducteur du véhicule 10 via une IHM, par exemple une manette de contrôle du système de régulation de vitesse, une IHM graphique affiché sur un écran, par exemple tactile, embarqué dans le véhicule ou par commande vocale.

Dans une deuxième opération, la vitesse (par exemple la vitesse longitudinale Vx du véhicule 10 selon l'axe longitudinal X d'un repère X,Y associé au véhicule 10, l'axe longitudinal correspondant à l'axe dans le sens de déplacement du véhicule 10) du véhicule 10 est déterminée ou reçue, par exemple d'un capteur de vitesse de type odomètre.

Dans une troisième opération, un coefficient de pondération, noté R, à appliquer à une valeur d'accélération maximale déterminée du système de régulation de vitesse, notée AO, est déterminé ou calculé en fonction de la vitesse du véhicule 10 obtenue à la deuxième opération. A un instant courant 't', un coefficient de pondération R est ainsi déterminé en fonction de la vitesse mesurée ou obtenue à cet instant 't'.

De manière avantageuse, le coefficient de pondération diminue lorsque la vitesse du véhicule augmente, c'est-à-dire que le coefficient de pondération est selon une fonction monotone décroissante de la vitesse du véhicule, au moins dans un intervalle de vitesse compris entre une valeur seuil basse (ou minimale) de vitesse, notée V0, et une valeur seuil haute (ou maximale) de vitesse, notée Vm.

La valeur du coefficient de pondération est par exemple obtenue d'une table de correspondance, dite LUT (de l'anglais « Look-Up Table ») stockée dans une mémoire du véhicule 10 associée au calculateur mettant en œuvre le processus. Une table de correspondance met en relation ou en correspondance une valeur de R pour une vitesse, pour chaque vitesse d'un ensemble de valeurs de vitesses. Si la vitesse mesurée est comprise entre deux vitesses stockées dans la table, la valeur de R pour cette vitesse est par exemple obtenue par interpolation des deux valeurs de R associées aux valeurs de vitesse de la table entourant la vitesse mesurée.

Selon une variante, la valeur du coefficient de pondération est obtenue en fonction de la vitesse selon la fonction suivante :

[Math 1]

$$R(V) = 1 - \frac{V^2}{(Vm + V0)^2}$$

Avec R(V) le coefficient de pondération fonction de la vitesse V, Vm la valeur seuil haute de vitesse et V0 la valeur seuil basse de vitesse.

Les valeurs V0 et Vm correspondent par exemple à des paramètres déterminés ou définis du système de régulation de vitesse et stockés en mémoire. Selon une variante, ces paramètres sont réglables, par exemple par le conducteur de la voiture via une IHM et/ou par une personne chargée de l'entretien du véhicule 10, par exemple via un outil de diagnostic.

A titre d'exemple, V0 = 5.5 m.s⁻¹ (soit 20 km/h) et Vm = 50 m.s⁻¹ (soit 180 km/h).

Selon d'autres exemple, V0 est égal à 4, 5, 6, 7, 8 ou 10 m.s⁻¹ et Vm est égal à 45, 55 ou 60 m.s⁻¹.

Dans une quatrième opération, la valeur d'accélération potentielle brute est déterminée en fonction du coefficient de pondération obtenu à la troisième opération et de la valeur d'accélération maximale déterminée, notée AO.

La valeur d'accélération potentielle brute, notée A, est par exemple obtenue à partir de l'équation sui- vante :

$$A = A0 * R(V)$$

AO correspond par exemple à un paramètre déterminé ou défini du système de régulation de vitesse et stocké en mémoire. Selon une variante, ce paramètre AO est réglable, par exemple par le conducteur de la voiture via une IHM et/ou par une personne chargée de l'entretien du véhicule 10, par exemple via un outil de diagnostic.

L'accélération maximale déterminée AO est par exemple égale à 1.6 m.s⁻². Selon d'autres exemples, AO est égale à 1.2, 1.5, 2, 2.5 ou 3 m.s⁻².

La figure 2 représente un exemple de fonction 21 entre l'accélération potentielle brute notée A en ordonné du diagramme 2) et la vitesse du véhicule 10 (notée V en abscisse du diagramme 2).

Selon cet exemple, A = AO pour une vitesse V du véhicule 10 comprise entre 0 et V0. Puis pour V comprise entre V0 et Vm, l'accélération potentielle brute est selon une fonction strictement décroissante, c'est-à-dire que plus la vitesse V augmente, plus l'accélération potentielle brute A diminue, depuis une valeur maximale correspondant à AO jusqu'à une valeur minimale, par exemple égale à 0, 1.1, 0.2 ou 0.3 m.s$^{-2}$.

La fonction entre l'accélération potentielle brute A et la vitesse V correspond par exemple à un polynôme du second degré, de type :

$$A = C0*V^2 + C1*V + C2$$

Avec CO, C1 et C2 les coefficients du polynôme, C0 étant négatif et C1 proche de 0. C1 étant proche de 0, il est possible d'écrire ou d'approximer la fonction entre l'accélération potentielle brute A et la vitesse V de la façon suivante :

$$A = C0*V^2 + C2$$

Avec C0 par exemple égal à -0.0004 et C2 par exemple égal à 1.608.

L'équation de R(V) s'explique de la manière suivante.

L'objectif de l'invention est de faire diminuer l'accélération potentielle brute en fonction de la vitesse, à partir d'une valeur seuil basse de vitesse V0.

Par exemple, à partir de V = VO, l'accélération potentielle brute diminue avec une valeur de secousse (de l'anglais « jerk », aussi appelée valeur d'à-coup), notée j, constante. Une valeur de secousse correspond avantageusement à une grandeur représentant une variation de l'accélération dans le temps, exprimée en m.s$^{-3}$.

Ainsi, pour V < VO, l'accélération potentielle brute en fonction du temps 't' et la vitesse V en fonction du temps 't' sont de la forme :

$$A(t) = A0 \text{ et } V(t) = A0 * t.$$

$$\text{Pour } V > V0 :$$

$$A(t) = A0 - j * t \text{ et } V(t) = A0 * t - j * t^2/2.$$

$$A \text{ } t = tm, V = Vm \text{ et } A = 0, \text{ d'où}$$

$$tm = A0/j \text{ et } j = A0^2/(2*(Vm-V0)).$$

Dans une cinquième opération, l'accélération du véhicule 10 est contrôlée en fonction de la valeur d'accélération potentielle brute.

Par exemple, dans le cas d'un système CC, l'accélération de consigne correspond à l'accélération potentielle brute jusqu'à atteindre la vitesse de consigne.

Selon un autre exemple, par exemple dans le cas d'un système ACC, l'accélération est déterminée en fonction des paramètres dynamiques du véhicule 10 et du véhicule cible, avec comme contrainte de ne pas dépasser (c'est-à-dire de ne pas être supérieure) à l'accélération potentielle brute déterminée en fonction de la vitesse du véhicule 10.

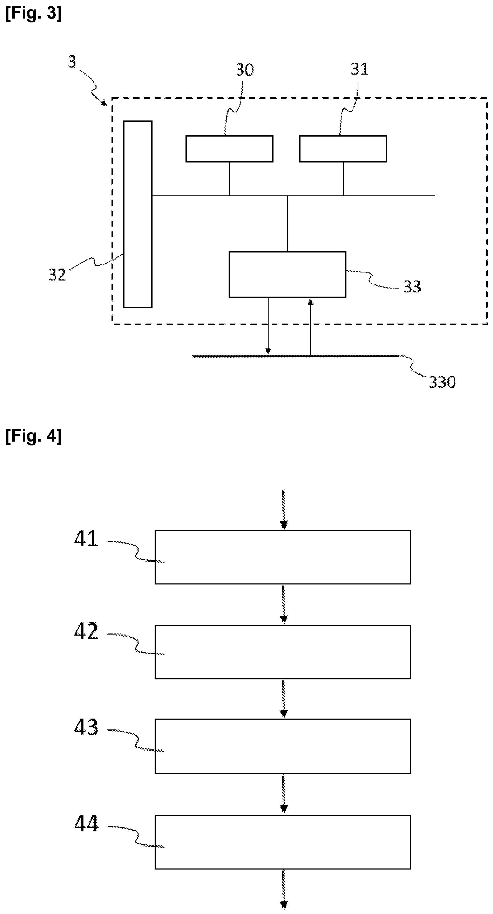

La figure 3 illustre schématiquement un dispositif 3 configuré pour contrôler l'accélération d'un véhicule, par exemple du véhicule 10, selon un exemple de réalisation particulier et non limitatif de la présente invention. Le dispositif 3 correspond par exemple à un dispositif embarqué dans le véhicule 10, par exemple un calculateur.

Le dispositif 3 est par exemple configuré pour la mise en œuvre des opérations décrites en regard des figures 1 et 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon différents exemples de réalisation particuliers et non limitatifs, le dispositif 3 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 3 comprend un bloc 32 d'éléments d'interface pour communiquer avec des dispositifs externes. Les éléments d'interface du bloc 32 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 3 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 3.

La figure 4 illustre un organigramme des différentes étapes d'un procédé de contrôle d'accélération d'un véhicule, par exemple du véhicule 10, selon un exemple de réalisation particulier et non limitatif de la présente invention. Le procédé est par exemple mis en œuvre par un dispositif embarqué dans le véhicule 10 ou par le dispositif 3 de la figure 3.

Dans une première étape 41, une information représentative d'une vitesse de consigne pour le système de régulation de vitesse est reçue.

Dans une deuxième étape 42, un coefficient de pondération d'une valeur d'accélération maximale déterminée du système de régulation de vitesse est déterminé en fonction d'une vitesse du véhicule, le coefficient de pondération diminuant lorsque la vitesse du véhicule augmente.

Dans une troisième étape 43, une valeur d'accélération potentielle brute est déterminée en fonction du coefficient de pondération et de la valeur d'accélération maximale déterminée.

Dans une quatrième étape 44, l'accélération du véhicule est contrôlée en fonction de la valeur d'accélération potentielle brute.

Selon une variante, les variantes et exemples des opérations décrits en relation avec la figure 1 et/ou 2 s'appliquent aux étapes du procédé de la figure 4.

Bien entendu, la présente invention ne se limite pas aux exemples de réalisation décrits ci-avant mais s'étend à un procédé de contrôle d'un système de régulation de vitesse d'un véhicule, par exemple un véhicule autonome, qui inclurait des étapes secondaires sans pour cela sortir de la portée de la présente invention. Il en serait de même d'un dispositif configuré pour la mise en œuvre d'un tel procédé.

La présente invention concerne également un système de régulation de vitesse pour véhicule comprenant le dispositif 3 de la figure 3.

La présente invention concerne également un véhicule, par exemple automobile ou plus généralement un véhicule autonome à moteur terrestre, comprenant le dispositif 3 de la figure 3 ou le système de régulation de vitesse pour véhicule ci-dessus.

**Revendications**

1. Procédé de contrôle d'accélération d'un véhicule (10) embarquant un système de régulation de vitesse, ledit procédé comprenant les étapes suivantes :

   - réception (41) d'une information représentative d'une vitesse de consigne pour ledit système de régulation de vitesse ;
   - détermination (42) d'un coefficient de pondération d'une valeur d'accélération maximale déterminée dudit système de régulation de vitesse en fonction d'une vitesse dudit véhicule (10), ledit coefficient de pondération diminuant lorsque la vitesse dudit véhicule augmente ;
   - détermination (43) d'une valeur d'accélération potentielle brute en fonction dudit coefficient de pondération et de ladite valeur d'accélération maximale déterminée ;
- contrôle (44) de l'accélération dudit véhicule (10) en fonction de ladite valeur d'accélération potentielle brute.

2. Procédé selon la revendication 1, pour lequel ledit coefficient de pondération, noté R(V), est égal à :

$$R(V) = 1 - (V/(Vm+V0))^2,$$

avec R(V) correspondant audit coefficient de pondération, V correspondant à ladite vitesse dudit véhicule (10), Vm correspondant à une valeur seuil haute de vitesse et V0 correspondant à une valeur seuil basse de vitesse.

3. Procédé selon la revendication 2, pour lequel Vm est égale à 50 m/s et V0 est égale à 5.5 m/s.

4. Procédé selon la revendication 2 ou 3, pour lequel ladite accélération potentielle brute, notée A, est égale à :

$$A = A0 * R(V),$$

avec A0 correspondant à ladite valeur d'accélération maximale déterminée.

5. Procédé selon la revendication 4, pour lequel A0 est égale à 1.6 m/s$^2$.

6. Procédé selon l'une des revendications 1 à 5, pour lequel ledit système de régulation de vitesse correspond à un système de régulation adaptative de vitesse.

7. Programme d'ordinateur comportant des instructions pour la mise en œuvre du procédé selon l'une quelconque des revendications précédentes, lorsque ces instructions sont exécutées par un processeur.

8. Support d'enregistrement lisible par un ordinateur sur lequel est enregistré un programme d'ordinateur comprenant des instructions pour l'exécution des étapes du procédé selon l'une des revendications 1 à 6.

9. Dispositif (3) de contrôle d'accélération d'un véhicule, ledit dispositif (3) comprenant une mémoire (31) associée à au moins un processeur (30) configuré pour la mise en œuvre des étapes du procédé selon l'une quelconque des revendications 1 à 6.

10. Véhicule (10) comprenant le dispositif (3) selon la revendication 9.

**Patentansprüche**

1. Verfahren zum Überprüfen der Beschleunigung eines Fahrzeugs (10), in das ein Tempomatsystem eingebettet ist, wobei das Verfahren die folgenden Schritte umfasst:

   - Empfangen (41) von Informationen, die für eine eingestellte Geschwindigkeit für das Tempomatsystem repräsentativ sind;
   - Bestimmung (42) eines Gewichtungskoeffizienten eines maximalen Beschleunigungswerts, der von dem Tempomaten in Abhängigkeit von der Geschwindigkeit des Fahrzeugs (10) bestimmt wird, wobei der Gewichtungskoeffizient mit zunehmender Geschwindigkeit des Fahrzeugs abnimmt;
   - Bestimmung (43) eines potentiellen Bruttobeschleunigungswerts in Abhängigkeit von dem Gewichtungskoeffizienten und dem ermittelten maximalen Beschleunigungswert;
   - Steuerung (44) der Beschleunigung des Fahrzeugs (10) entsprechend dem Bruttopotenzial-Beschleunigungswert.

2. Verfahren nach Anspruch 1, wobei das Gewicht, das als R(V) bezeichnet wird, gleich ist:

$$R(V) = 1 - (V/(Vm+V0))^2,$$

wobei R(V) dem Gewichtungsfaktor entspricht, V der Geschwindigkeit des Fahrzeugs (10) entspricht, Vm einem oberen Schwellenwert der Geschwindigkeit entspricht und V0 einem niedrigen Schwellenwert der Geschwindigkeit entspricht.

3. Verfahren nach Anspruch 2, wobei Vm gleich 50 m/s und V0 gleich 5,5 m/s ist.

4. Verfahren nach Anspruch 2 oder 3, wobei die Bruttopotentialbeschleunigung, die als A bezeichnet wird, gleich

$$A = A0 * R(V) \text{ ist,}$$

wobei A0 dem angegebenen maximalen Beschleunigungswert entspricht.

5. Verfahren nach Anspruch 4, wobei A0 gleich 1,6 m/s$^2$ ist.

6. Verfahren nach einem der Ansprüche 1 bis 5, wobei das Geschwindigkeitsregelsystem einem adaptiven Geschwindigkeitsregelungssystem entspricht.

7. Computerprogramm, das Anweisungen zum Ausführen des Verfahrens nach einem der vorhergehenden Ansprüche enthält, wenn solche Anweisungen von einem Prozessor ausgeführt werden.

8. Computerlesbares Aufzeichnungsmedium, auf dem ein Computerprogramm aufgezeichnet ist, einschließlich Anweisungen zur Durchführung der Verfahrensschritte nach einem der Ansprüche 1 bis 6.

9. Vorrichtung (3) zur Steuerung der Beschleunigung eines Fahrzeugs, wobei die Vorrichtung (3) einen Speicher (31) umfasst, der mindestens einem Prozessor (30) zugeordnet ist, der zum Ausführen der Verfahrensschritte gemäß einem der Ansprüche 1 bis 6 konfiguriert ist.

10. Fahrzeug (10), umfassend die Vorrichtung (3) nach Anspruch 9.

**Claims**

1. A method for checking the acceleration of a vehicle (10) embedding a cruise control system, said method comprising the following steps:

   - receiving (41) information representative of a set speed for said cruise control system;
   - determination (42) of a weighting coefficient of a maximum acceleration value determined by said cruise control system as a function of a speed of said vehicle (10), said weighting coefficient decreasing as the speed of said vehicle increases;
   - determination (43) of a gross potential acceleration value as a function of said weighting coefficient and said determined maximum acceleration value;
   - control (44) of the acceleration of said vehicle (10) according to said gross potential acceleration value.

2. The method of claim 1, wherein said weight, denoted R(V), is equal to:

$$R(V) = 1 - (V/(Vm+V0))^2,$$

where R(V) corresponding to said weighting factor, V corresponding to said speed of said vehicle (10), Vm corresponding to an upper threshold value of speed, and V0 corresponding to a low threshold value of speed.

3. The method of claim 2, wherein Vm is equal to 50 m/s and V0 is equal to 5.5 m/s.

4. A method according to claim 2 or 3, wherein said gross potential acceleration, denoted A, is equal to:

$$A = A0 * R(V),$$

with A0 corresponding to said specified maximum acceleration value.

5. The method of claim 4, wherein A0 is equal to 1.6 m/s$^2$.

6. A method according to any one of claims 1 to 5, wherein said speed control system corresponds to an adaptive speed control system.

7. A computer program containing instructions for carrying out the method according to any of the preceding claims, when such instructions are executed by a processor.

8. A computer-readable recording medium on which a computer program is recorded including instructions for performing the process steps according to any of claims 1 to 6.

9. A device (3) for controlling the acceleration of a vehicle, said device (3) comprising a memory (31) associated with at least one processor (30) configured for carrying out the process steps according to any one of claims 1 to 6.

10. A vehicle (10) comprising the device (3) according to claim 9.

**[Fig. 1]**

**[Fig. 2]**

[Fig. 3]

[Fig. 4]

**RÉFÉRENCES CITÉES DANS LA DESCRIPTION**

**Documents brevets cités dans la description**

- EP 3498556 A1
- US 2017282927 A1